# EUROPÄISCHE PATENTSCHRIFT

(11) **EP 0 764 787 B1**
(45) Veröffentlichungstag und Bekanntmachung des Hinweises auf die Patenterteilung: **27.10.1999**
(21) Anmeldenummer: 96117052.9
(22) Anmeldetag: 27.07.1993
(51) Int. Cl.: F16B 19/00, B23K 9/20

(54) **Montagesystem, Schweissbolzen für das Montagesystem, und Verfahren zur Montage eines Montageteils an einen Schweissbolzen**
Assembling system, welding stud for such assembly system, and method for assembling an assembly part to a welding stud
Système d'assemblage, cheville à souder pour le système d'assemblage et procédé de montage d'un élément d'assemblage à une cheville à souder

(30) Priorität: 30.07.1992 DE 4225199; 30.07.1992 DE 4225215; 30.07.1992 DE 4225216; 05.01.1993 DE 4300120; 05.01.1993 DE 4300121
(43) Veröffentlichungstag der Anmeldung: 26.03.1997
(62) Teilanmeldung aus: 93915965.3
(73) Patentinhaber: SPLITFAST TECHNOLOGIES LIMITED, Dublin 2 (IE)
(72) Erfinder: Barandun, Heinz Peter, 8044 Zürich (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(56) Entgegenhaltungen:
- EP-A- 0 550 977
- CA-A- 887 911
- DE-A- 1 565 557
- DE-A- 2 504 365
- DE-A- 3 218 886
- DE-B- 2 227 384
- DE-C- 832 086
- DE-U- 7 925 469
- GB-A- 1 275 799
- US-A- 3 996 446

## Beschreibung

Die Erfindung betrifft ein Montagesystem mit einem Schweissbolzen nach Anspruch 1, einen Schweissbolzen nach Anspruch 14 und ein Verfahren zur Montage nach Anspruch 12 und Demontage eines Montageteils nach Anspruch 13.

Montagesysteme mit Schweissbolzen sind bekannt, wie sie häufig im Automobilbau verwendet werden, um beispielsweise Karosserieteile oder elektrische Leitungen oder dergleichen zu befestigen. Allen diesen vorbekannten Schweissbolzen ist gemeinsam, dass sie als massive Bolzen gefertigt sind, die in der Regel einen Flansch aufweisen, an dem sie auf dem Karosserieblech aufgeschweisst werden, beispielsweise gemäss DE-A-32 18 886 oder DE-U-79 25 469. Ein solcher massiver Bolzen bedingt an einem Bolzen-Schweissgerät eine flexible Spannzange. Aus den Zeichnungen der Offenlegungsschrift geht hervor, dass die Halterung mit der Spannzange des Bolzen-Schweissgerätes, bedingt durch die starre Ausführung des Bolzens und insbesondere auch durch den Flansch mit breiterem Durchmesser, aufwendige mechanische Teile aufweisen muss, die selbst bei hohen Taktfrequenzen zuverlässig arbeiten müssen.

Ausserdem ergeben sich aus der Ausgestaltung der vorbekannten Schweissbolzen Probleme bezüglich der gleichmässigen Schweissgüte der Verbindung zwischen dem Blechteil und dem Bolzen, wodurch spezielle Massnahmen für die Ausgestaltung der Schweissflächen des Bolzens notwendig sind. Dies trifft auch für die Befestigungselemente gemäss DE-B-2 227 384 zu, wonach entweder Schraubbolzen oder Schraubenmuttern als Befestigungselemente angeschweisst werden. Diese beiden gezeigten Befestigungselemente stellen besonders hohe Anforderungen an die Spannzange des Schweissgerätes, die speziell dafür ausgestaltet werden muss.

Ausserdem ist bei Ermüdung der Spannzange der elektrische Kontakt zum Bolzen nicht mehr gewährleistet, was zu Schmorstellen führt und die Zuverlässigkeit, die besonders bei Montagebändern unerlässlich ist, herabsetzt.

Schliesslich erfordern massive, angeschweisste Schweissbolzen relativ aufwendige Montageteile mit beschränkter Festigkeit ihrer Verbindung mit dem Befestigungselement.

Ein Befestigungselement ist aus der DE-C-832 086 bekannt, das als Spannhülse ausgebildet ist. Obwohl eine solche Spannhülse an sich anschweissbar wäre, da sie aus Metall besteht, ist in der genannten Patentschrift kein Hinweis darauf zu finden, und im Gegenteil dazu die Erfindung darauf gerichtet, die Enden der Hülse abzurunden. Daher ist diese Spannhülse für eine dauerhafte Befestigung ungeeignet und weist auch keine Rückhalteteile für die Befestigung von Montageteilen auf.

Des weiteren sind aus der CA-A-887,911, bzw. GB-A-1,275,799 Befestigungselemente bekannt, wobei eine geschlitzte Hülse mittels eines unter Federdruck stehenden Bolzens im Innern seines Mittelteils erfasst, an ein Bauteil gedrückt und angeschweisst wird, woraufhin die Seitenteile umgebogen werden. Ein solches Verfahren eignet sich nicht für eine rationelle und vor allem sichere Produktion, wie sie beim Automobilbau gefordert wird.

Das gleiche wie oben gilt auch für das topfartige Element gemäss US-A-3,996,446, das zwar federnd ausgebildet ist, aber zuerst in die einzig mögliche richtige Lage gebracht werden muss, um beim Anschweissen im Innern erfasst und angedrückt zu werden.

Es ist von diesem bekannten Stand der Technik ausgehend eine Aufgabe der vorliegenden Erfindung, ein Montagesystem mit einem Schweissbolzen anzugeben, das einerseits ein sicheres Anschweissen des Schweissbolzens an Unterlagen mit einem grösseren Dickenbereich gewährleistet und bereits in seiner einfachsten Ausführungsform die Möglichkeit bietet, verschiedenartige Montageteile leicht daran zu befestigen, wobei der Schweissbolzen andererseits den Halteteil des Schweissgerätes sowie seine Zuführung wesentlich vereinfacht und einen optimalen Stromfluss zwischen dem Halter und dem Schweissbolzen beim Schweissvorgang gewährleistet. Ein solches System ist in Patentanspruch 1 definiert und ein solcher Schweissbolzen in Patentanspruch 10.

Ferner weisen die vorbekannten Schweissbolzen oder Befestigungselemente eine bestimmte Schweissfläche auf, die lagerichtig im Schweissgerät angeordnet sein muss. Dies kompliziert die Zuführung, indem diese Elemente vorsortiert in das Schweissgerät eingeführt werden müssen.

Bei bevorzugten Ausführungsformen des erfindungsgemässen Schweissbolzens muss dieser einerseits nicht lagerichtig vorsortiert werden, um in den starren Halter eingeführt zu werden, und andererseits ist die Federung, bzw. Anpresskraft, durch die Ausgestaltung des Längsschlitzes an den stromführenden Halter derart hoch, dass ein optimaler Uebergang des Stromflusses vom Halter auf den Schweissbolzen immer gewährleistet ist.

Während in einer Ausführungsform die konischen Trichter der beiden Stirnseiten des Schweissbolzens gewindeförmig ausgebildet sind, kann der Schweissbolzen auch mit einem Aussengewinde oder mit Rückhaltekrallen versehen sein. Allen Schweissbolzen gemeinsam ist jedoch, dass sie federnd ausgebildet sind, um eine für die Befestigungstechnik notwendige Flexibilität und einen guten Stromübergang zu gewährleisten.

Wie eingangs erwähnt, werden vorbekannte Bolzen beispielsweise mit einem Schweissgerät gemäss DE-A-32 18 886 oder DE-U-79 25 469 angeschweisst. Bei solchen Schweissgeräten mit bekannten Bolzenhaltern mit einer Spannzange, die aus Stahl oder Berylliumkupfer gefertigt ist, unterliegt bei der geforderten Flexibilität die Spannzange einem grossen Verschleiss, besonders dann, wenn die Kontakt- und Spannflächen der Spannzange an spitzen Gewindezonen der Bolzen anliegen.

Beim Bolzenschweissen nach dem Hubzündungsprinzip werden über die kleinen Kontaktstellen 3 - 5000 A übertragen, was bei Nachlassen der Spannkraft der Spannzange des Halters zu Schmorstellen führt. Dies setzt die Zuverlässigkeit, die besonders bei Montagebändern unerlässlich ist, herab.

Aus der EP-A-406 459 ist ausserdem eine Bolzenschweisspistole bekannt, die Bolzenhalterrohre mit unterschiedlichen Durchmessern benötigt sowie Kunststoffscheibeneinsätze, wobei die Halterrohre einem relativ starken Verschleiss unterworfen sind.

Schliesslich bedingt die Ausgestaltung der vorbekannten Schweissbolzen mit einer bestimmten Schweissfläche eine Einrichtung zum gerichteten Zuführen der Schweissbolzen.

Bei vorbekannten Anordnungen von Montageteilen auf starre Befestigungselemente weist die Innenwand der Befestigungsbohrung des zu montierenden Montageteils, meist aus Kunststoff, in der Regel Stege auf, die gleichmässig als steife Rippen verteilt sind. Das Aufsetzen eines solchen Teiles auf den massiven Schweissbolzen, der profiliert sein kann, erfordert hohe Aufdrückkräfte, die einen hohen Energieaufwand und eine steife Konstruktion bedingen, insbesondere bei halb- oder vollautomatischen Montagewerkzeugen.

Es sind auch Montageteile mit flexiblen Sperrzungen bekannt, die in eine Profilierung des Schweissbolzens eingreifen, doch lassen sich dort nur geringe Zug- und Scherkräfte vom Montageteil auf den Bolzen übertragen.

Auch bei einer zylindrischen Bohrung des Montageteils sind die Montagekräfte noch um ein Vielfaches höher als beim Montageteil mit Stegen, doch ergeben sich auch hier nur punktförmige Kontaktstellen zwischen dem Bolzen und der Innenwandung der Bohrung des Montageteils.

Es ist davon ausgehend eine weitere Aufgabe der Erfindung, ein Verfahren zur Montage eines Montageteils für ein Montagesystem an einem angeschweissten Schweissbolzen anzugeben, das eine wesentliche Vereinfachung der Ausgestaltung der Montageteile und ihr Aufsetzen ergibt und eine grössere Sicherheit und Zuverlässigkeit der Verbindung bringt sowie eine grössere Vielfalt der Montageteile ermöglicht. Ein Verfahren, das diese Aufgabe löst, ist in den Patentansprüchen 12 und 13 beschrieben.

Die Erfindung wird im folgenden anhand einer Zeichnung von Ausführungsbeispielen näher erläutert.
- Fig. 1: zeigt in perspektivischer Sicht ein erstes Ausführungsbeispiel eines erfindungsgemässen, als Befestigungselement dienenden Schweissbolzens,
- Fig. 2: zeigt das Befestigungselement von Fig. 1 im Schnitt,
- Fig. 3: zeigt ein Befestigungselement gemäss Fig. 1 in einem starren Halter eines Schweissgerätes,
- Fig. 4: zeigt ein angeschweisstes Befestigungselement gemäss Fig. 1 mit einem umgebenden Montageteil,
- Fig. 5: zeigt ein weiteres, angeschweisstes Befestigungselement mit einem daran befestigten Montageteil,
- Fig. 6: zeigt ein weiteres, angeschweisstes Befestigungselement mit einem daran befestigten Montageteil,
- Fig. 7: zeigt im Schnitt eine weitere Ausführungsvariante eines Befestigungselementes, mit Aussengewinde,
- Fig. 8: zeigt im Schnitt eine weitere Ausführungsvariante eines Befestigungselementes mit Federring,
- Fig. 9: zeigt ein weiteres Ausführungsbeispiel eines Befestigungselementes mit inneren Haltekrallen,
- Fig. 10: zeigt ein Befestigungselement mit äusseren Haltekrallen mit einem daran befestigten Montageteil,
- Fig. 11: zeigt ein Befestigungselement gemäss Fig. 1 mit einem daran befestigten Montageteil,
- Fig. 12: zeigt ein Befestigungselement gemäss Fig. 1 mit einem daran befestigten Montageteil,
- Fig. 13: zeigt eine Ausführungsvariante zum Befestigungselement gemäss Figur 1,
- Fig. 14: zeigt ein Ausführungsbeispiel eines elektrischen Anschlusses mit dem erfindungsgemässen Befestigungselement,
- Fig. 15: zeigt eine Anordnung zum Messen der Schweissgüte,
- Fig. 16: zeigt eine weitere Befestigungsart eines Montageteils,
- Fig. 17 u. 18: zeigen zwei Ausführungsvarianten zu einem Teil gemäss Fig. 16,
- Fig. 19: zeigt ein weiteres Montageteil,
- Fig. 20: zeigt eine weitere Ausführungsvariante eines Befestigungselements und ein dazugehöriges Montageteil, und
- Fig. 21: zeigt einen Querschnitt eines anderen Ausführungsbeispiels eines Befestigungselements.

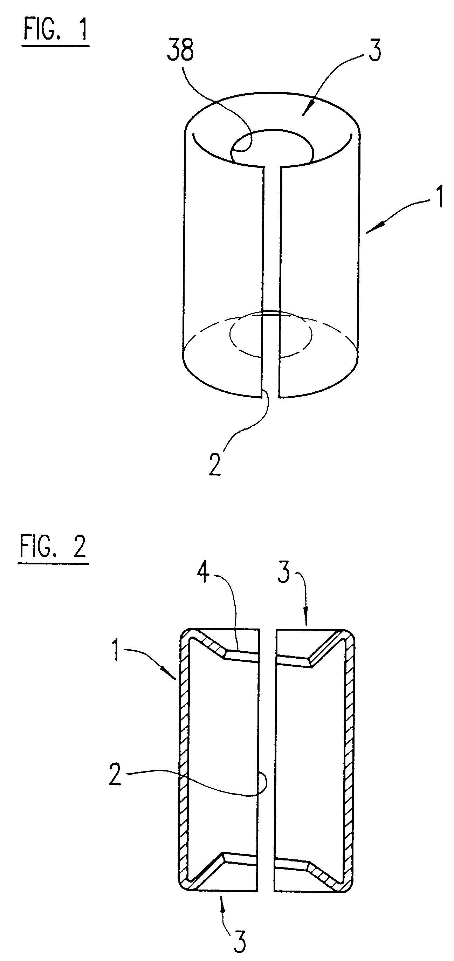

In den Fig. 1 und 2 ist ein erstes, als Schweissbolzen ausgebildetes Befestigungselement 1 dargestellt, das als federnde Hülse ausgebildet ist, und das einen Längsschlitz 2 aufweist. Wie aus Fig. 2 hervorgeht, ist dieses Befestigungselement axial symmetrisch ausgeführt und beide Stirnseiten 3 trichterförmig nach innen ausgebildet. Die Stirnseiten sind jedoch nicht radial-symmetrisch ausgebildet, sondern derart gestaltet, dass die Innenkanten 4 der Stirnseiten ein gewindeähnliches Profil aufweisen. Durch die hülsenförmige, geschlitzte Ausbildung des Befestigungselementes weist dieses - bei geeigneter Materialwahl - eine grosse Federkraft auf, die vielfache Vorteile bringt. Die daran befestigbaren Montageteile weisen in der Regel eine relativ grosse Streuung der Toleranzen auf, so dass die erforderliche Flexibilität bei den starren Bolzen alleine von den Bauteilen aus Kunststoff oder Metall aufgebracht werden müssen. Dies hat den Nachteil, dass die durch das Montageteil übertragenen Kräfte gering sind. Die übertragbaren Kräfte von einem flexiblen Befestigungselement auf ein Montageteil sind somit wesentlich höher. Ausserdem besitzen die aus Vollmaterial gefertigten Schweissbolzen ein hohes Gewicht, das bei der Menge der zur Anwendung gelangenden Schweissbolzen in einem Automobil zu einem nicht vernachlässigbaren Gesamtgewicht führt.

Die Notwendigkeit, bei einem vollen Schweissbolzen die gesamte Fläche anzuschweissen führt dazu, dass die dadurch entstehende grosse Schweissfläche in einem ungünstigen Verhältnis zur Dicke des Bleches steht. Dadurch erfährt dünnes Blech eine starke Auf- und Durchwärmung im Schweissbereich, was zu einer Schwächung der Festigkeit in der Randzone des Bolzens zum Blech führt. Diese Nachteile werden durch das Befestigungselement gemäss den Fig. 1 und 2 beseitigt, da nur ringförmige Anschweisszonen und vergleichbare Materialstärken vorhanden sind.

Wie bereits eingangs erwähnt, führt die symmetrische Ausgestaltung des Befestigungselementes dazu, dass diese nur axial gerichtet in die Zuleitung gebracht werden müssen, und keiner lagerichtigen Vorsortierung bedürfen. Dies vereinfacht die Sortiereinrichtung und erhöht deren Zuverlässigkeit.

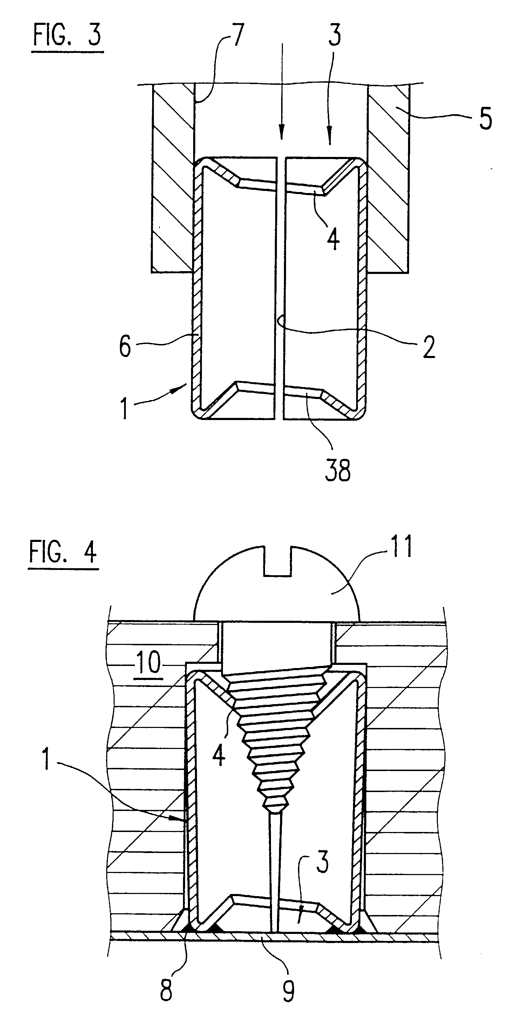

Wie erwähnt, liegt ein weiterer, bedeutsamer Vorteil des federnden, hülsenförmigen Befestigungselementes darin, dass das Schweissgerät wesentlich vereinfacht werden kann. Da das Befestigungselement federnd ausgestaltet ist, genügt es, anstatt einer geschlitzten Spannzange mit dem komplizierten Betätigungsmechanismus, als Halter ein starres Rohr zu verwenden. Dies ergibt nicht nur eine wesentliche Vereinfachung des Schweissgerätes, sondern auch eine wesentliche Erhöhung seiner Zuverlässigkeit. In Fig. 3 ist beispielhaft das Befestigungselement 1 gemäss Fig. 1 in einem Rohr 5 dargestellt. Die vorbekannte und übliche Zuführung der Befestigungselemente mittels flexibler Leitungen und Druckluft kann hier beibehalten werden, wobei, wie bereits erwähnt, die Befestigungselemente nur axial ausgerichtet werden müssen. Der Schweissvorgang als solcher bleibt auch der gleiche, so dass vorbekannte Anlagen verwendet werden können, an denen statt der komplexen Halterung mit beweglichen Spannzangen ein Halterrohr verwendet werden kann, das axial verschiebbar ist. Selbstverständlich muss der Druckluftimpuls, der nötig ist, um das Befestigungselement axial im Zuführrohr 5 in die Ausgangsstellung zu bringen, nach Grösse und Länge geeignet ausgewählt werden. Die durchgehende Oeffnung 38 des Befestigungselementes erlaubt es, ein Schutzgas an die Schweissstelle zu führen. Sowohl die Mantelfläche 6 des Befestigungselementes, als auch die innere Oberfläche 7 des Halters sind glatt ausgeführt, um eine möglichst störungsfreie axiale Zuführung und einen grossflächigen Kontakt zur Schweissstromübertragung zu gewährleisten, wobei das Material sowie der Durchmesser der Bohrung des Befestigungselementes bei der Auslegung und Berechnung des äusseren Durchmessers des Befestigungselementes und des Innen-Durchmessers des rohrförmigen Halters eine Rolle spielen, um eine entsprechende Vorspannung zu erreichen.

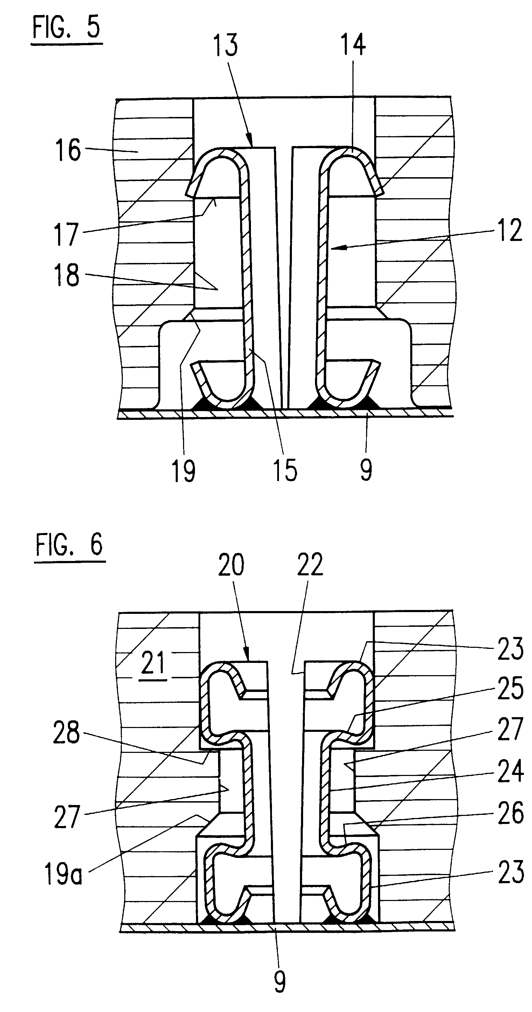

In Fig. 4 ist das angeschweisste Befestigungselement 1 gemäss Fig. 1 mit dem umgebenden Montageteil 10 dargestellt. Das Befestigungselement 1 ist über eine Schweissstelle 8 mit einem Bauteil 9, beispielsweise ein Karosserieblech eines Automobiles, verschweisst. Das Montageteil 10, beispielsweise aus Kunststoff, ist mittels einer Schraube 11 befestigt, die direkt in das Gewinde 4 des Befestigungselementes gedreht werden kann. Da das Befestigungselement auch nach seinem Anschweissen im oberen Bereich federnd ist, kann bereits beim Anpressen des Montageteiles eine Klemmwirkung erzielt werden, um nach dem Befestigen mittels der Schraube eine feste Verbindung zu ergeben.

In Fig. 5 ist ein weiteres Befestigungselement 12 dargestellt, das ebenfalls hülsenförmig und federnd ausgebildet ist und einen Längsschlitz aufweist, wobei jedoch die beiden Stirnflächen 13 nach aussen U-förmig gebogene Ränder 14 aufweisen. Diese Ränder 14, die von der Zylinderwand 15 abstehen, können eine Klemm- und Rückhaltewirkung entfalten. Zweckmässig weist dabei dieses Montageelement 16 an seiner Bohrung 18 eine Anschrägung 19 auf, um den gebogenen Rand 14 des Befestigungselementes besser überwinden zu können. Die beiden Aussenseiten des umgebogenen Randes 14 müssen derart beschaffen sein, dass sie eine genügend grosse Kontaktfläche zwischen dem Befestigungselement und dem Halter schaffen.

In Fig. 6 ist ein weiteres Befestigungselement 20 dargestellt, das durch seine Formgebung ein Montageelement 21 schon alleine durch Klemmwirkung zurückhalten kann. Das Befestigungselement 20 weist die gleichen Stirnflächen 3 und einen Längsschlitz 22 auf. Die Mantelfläche des Befestigungselementes ist nicht eben gestaltet, sondern weist zwei gleiche Endteile 23 und ein Mittelteil 24 auf, das einen kleineren Durchmesser aufweist als die Endteile. Dadurch entstehen aussen zwei Absätze 25 und 26, wovon der eine, Absatz 25, beim angeschweissten Befestigungselement zum Zurückhalten des Montageelementes dient. Das Montageelement 21 weist einen dem eingeschnürten Mittelteil 24 des Befestigungselementes entsprechenden Kragen 27 auf, dessen in der Zeichnung oberen Kante 28 den Absatz 25 hintergreift. Zwecks besseren Einführen des Montageelementes ist die untere Kante 19a abgeschrägt. Aus der Zeichnung ist ersichtlich, dass die angeschrägte Kante und der Kragen den oberen Teil des Befestigungselementes beim Einführen zusammendrückt und dieser obere Endteil anschliessend wieder auseinandergeht, um das Montageelement festzuhalten.

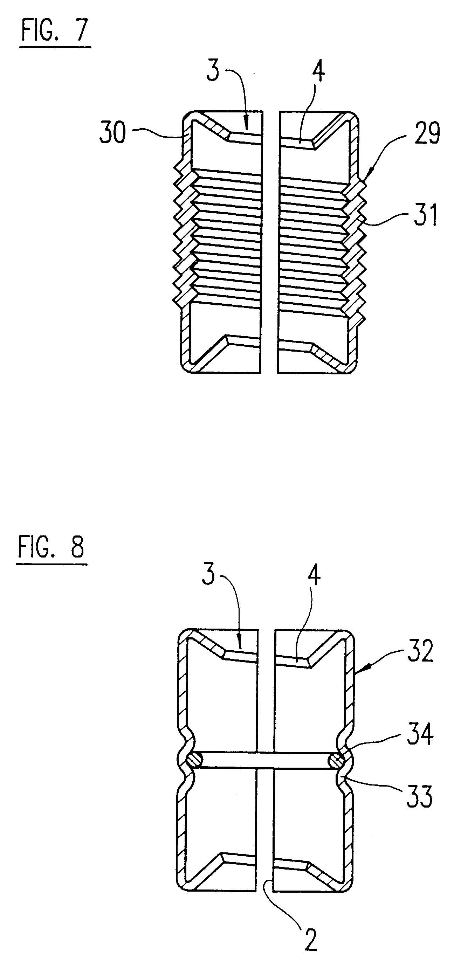

Das Befestigungselement 29 gemäss Fig. 7 weist die gleichen Stirnseiten 3 wie das Befestigungselement gemäss Fig. 1 auf, und auch die oberen, endseitigen Teile 30 sind gleich wie bei jenem Befestigungselement gearbeitet. Das Mittelteil 31 hingegen ist als schraubenähnliches Gewinde ausgebildet. Zu beachten ist, dass das Befestigungselement 29 gemäss Fig. 7 entweder innen eine Schraube und/oder aussen eine Schraube, resp. Mutter, aufnehmen kann.

Das Befestigungselement 32 gemäss Fig. 8 ist bis auf seinen Mittelteil gleich aufgebaut wie dasjenige gemäss Fig. 1. Das Mittelteil 33 des Befestigungselementes 32 ist S-förmig gestaltet, um innen einen federnden Klemmring 34 aufzunehmen, dessen Bedeutung für das Fixieren eines Montageelementes klar ersichtlich ist.

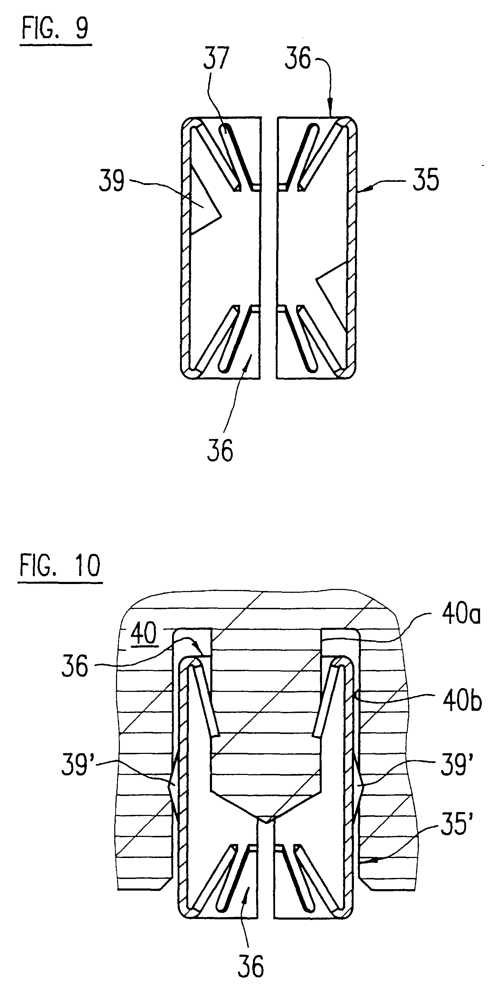

Das Befestigungselement 35 von Fig. 9 ist ein weiteres Ausführungsbeispiel. Jede Stirnseite 36 ist mit Einschnitten 37 versehen, wodurch sie federnd ausgebildet ist. Dadurch können nicht nur Schrauben mit Gewinde in der Bohrung 38 aufgenommen werden, sondern auch Pfosten oder dergleichen ohne Schraubengewinde, die durch die Klemmwirkung festgehalten werden können. Dieses Befestigungselement weist ebenfalls einen Schlitz auf. Zusätzlich sind Haltekrallen 39 axial versetzt aus dem Mantel des Befestigungselementes freigeschnitten und nach innen gebogen. Je nachdem ein Pfosten von der einen oder anderen Seite in das Befestigungselement eingeführt wird, greift die eine oder andere Kralle 39 in denselben ein und sichert ihn zusätzlich.

Fig. 10 zeigt ein ähnliches Befestigungselement 35' wie Fig. 9, jedoch sind die Haltekrallen 39' nicht nach innen, sondern nach aussen gebogen. Beim Aufsetzen eines Montageelementes 40 mit einem Pfosten 40a greifen die Krallen 39' in die Bohrungswand 40b des Montageelementes ein und sichern dasselbe zusätzlich.

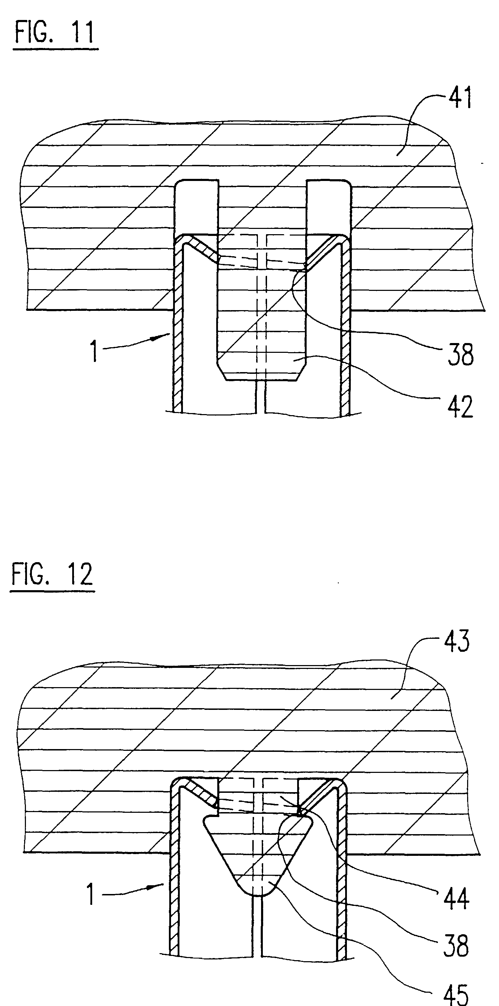

In Fig. 11 ist veranschaulicht, dass bei der Verwendung eines Montageteils 41 mit einem in die Bohrung 38 eines Befestigungselementes 1 hineinragenden Pfosten 42, das Umschliessen des Befestigungselementes 1 durch das Montageteil die Rückhaltekraft der Bohrungswand wesentlich erhöht.

In Fig. 12 ist ein weiteres Montageteil 43 mit einem Pfosten 44 mit einem formschlüssigen Widerhaken 45 dargestellt, der ein hohes Rückhaltevermögen aufweist.

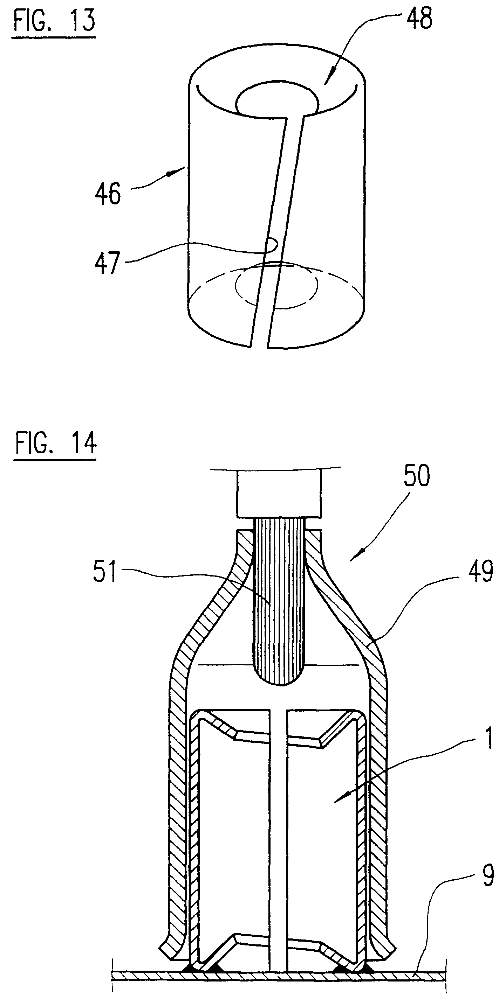

In Figur 13 ist veranschaulicht, dass der Begriff "Längsschlitz" nicht notwendigerweise einen Schlitz parallel zur Längsachse des Befestigungselementes bedeutet. Das Befestigungselement 46 weist einen Längsschlitz 47 auf, der bezüglich der Längsachse des Elementes geneigt ist. Die übrigen Teile des Elementes mit den Stirnflächen 48 sind gleich wie beim Element gemäss Figur 1.

In Figur 14 ist die Möglichkeit angegeben, ein erfindungsgemässes Befestigungselement als elektrischen Anschluss zu verwenden, wobei es sich im Prinzip um ein Element gemäss Figur 1 oder 13 handeln kann. Das Element 1 ist auf einer leitenden Unterlage 9 angeschweisst und dient als männlicher Steckerteil, über den das weibliche Kontaktteil 49 einer entsprechend geformten Kabelkontaktschelle 50 mit dem Kontaktstift 51 gesteckt werden kann. Durch die Verwendung eines zylindrischen oder annähernd zylindrischen, federnden Elementes ist ein automatisches und wirkungsvolles Anschliessen möglich, was mit Flachsteckern nicht möglich ist.

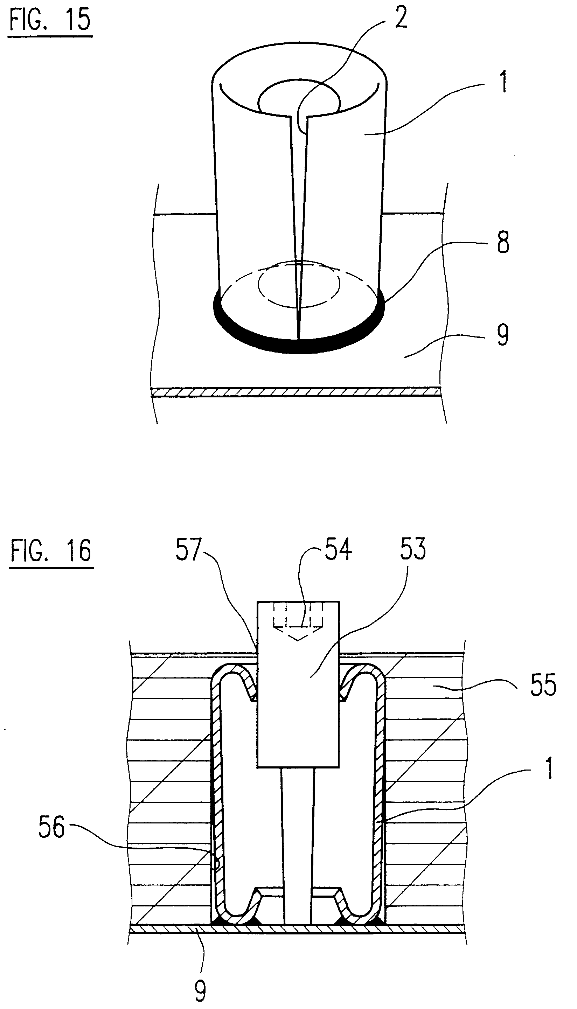

Gemäss Figur 15 ist es möglich, die mechanische Güte der Schweissnaht 8 auf der Unterlage 9 zu prüfen. Da das Befestigungselement 1 einen Schlitz 2 aufweist und es zusammengedrückt angeschweisst wird, hat dieses die Tendenz, sich nachher zu entspannen. Falls die Schweissnaht nicht gut ist, wird die Breite des Schlitzes 2 anders verlaufen als bei einer guten Schweissnaht. Es ist daher möglich, durch beispielsweise optische Ueberprüfung des Verlaufes des Schlitzes auf die Güte der Schweissnaht zu schliessen.

Figur 16 zeigt ein Verriegelungselement in Form eines Spreizstiftes 53, der in die Oeffnung 38 eines Befestigungselementes gemäss Figur 1 passt, und dessen Länge kleiner ist als der kleinste Abstand zwischen den Stirnflächen 3 des Befestigungselementes. Durch Hineinstossen des Stiftes in das Innere des Befestigungselementes kann die Verriegelung aufgehoben werden. Zum besseren Handhaben des Spreizstiftes weist dieser mindestens an einem Ende einen Schlitz oder Innensechskant 54 oder dergleichen auf. Mit diesem Spreizstift kann ein Montageelement 55 mit Sackloch 56 und kleinerer Oeffnung 57 für den Spreizstift aufgesteckt, verriegelt und entriegelt werden. Anstatt einem Spreizstift 53 mit einer glatten Oberfläche kann auch ein Stift mit gerillter oder als Gewinde ausgebildeter Oberfläche verwendet werden, um entweder eine bessere Retention oder ein Hinein- oder Herausdrehen des Spreizstiftes zu ermöglichen.

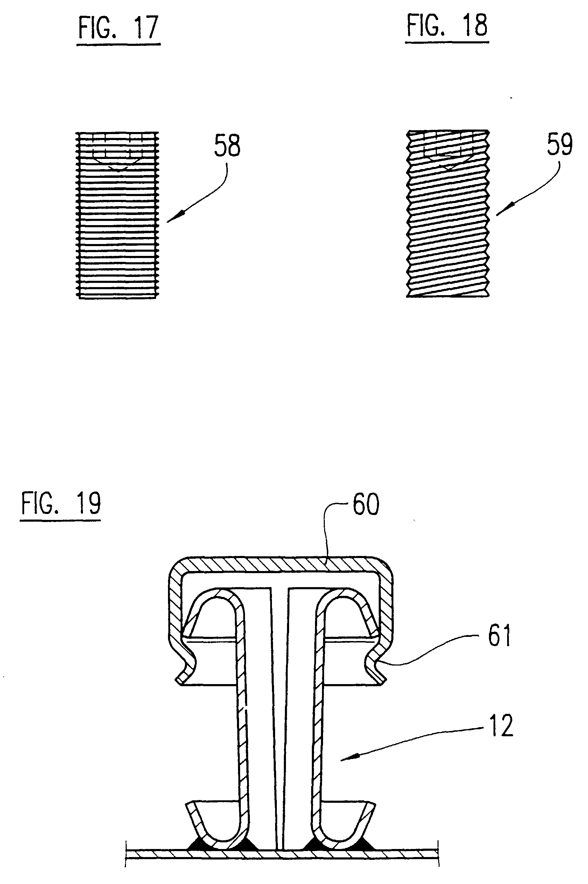

Figur 19 verdeutlicht, dass die Verwendung eines federnden Befestigungselementes die Möglichkeit eröffnet, auf ein solches gemäss Figur 5 ein starres Stück, beispielsweise eine starre Kappe 60 mit einem Innenwulst 61 aufzusetzen. Die Kappe selbst kann bereits ein Montageelement darstellen oder mit einem solchen verbunden sein.

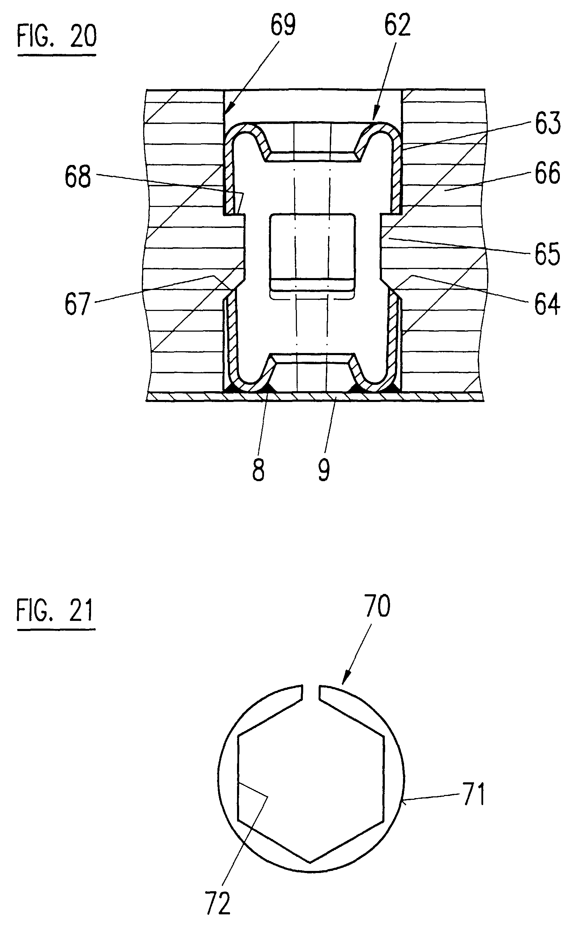

Figur 20 zeigt ein weiteres Ausführungsbeispiel eines Befestigungselementes. Das Befestigungselement 62 weist in seiner Hülsenwand 63 Fenster 64 auf, in die entsprechende Vorsprünge 65 in der Bohrung 69 im Montageelement 66 ragen und dieses verriegeln. Zwecks besserem Hineingleiten und Verriegeln weisen die Vorsprünge unten, zur Unterlage 9 hin, Abschrägungen 67 und nach oben hin einen Absatz 68 auf. Zum Entriegeln könnten nicht gezeigte Oeffnungen im Montageelement angebracht sein, in die ein entsprechend geformtes Werkzeug passt, um das Befestigungselement zusammenzudrücken.

Figur 21 zeigt, dass die Innenfläche 72 der Hülsenwand eines Befestigungselementes 70 anstatt zylindrisch mehreckig, z. B. sechseckig sein kann, um einen Verdrehschutz zu bieten, während die Aussenfläche 71 hier zylindrisch ist. Bei entsprechender Anpassung der Schweisspistole ist es auch denkbar, die Aussenfläche der Hülsenwand mehreckig, z. B. sechseckig zu gestalten.

Während in den Zeichnungen die Wandung der Längswand der Befestigungselemente gleichmässig dick dargestellt ist, können Teile davon, insbesondere das Mittelteil, eine geringere Dicke aufweisen als die übrigen Teile.

Es wurden eine Reihe von verschiedenen Befestigungselementen angegeben, die jedoch nicht erschöpfend behandelt worden sind. So lassen sich aus den Beispielen weitere Möglichkeiten kombinieren, wobei jedoch die wesentlichen Merkmale des Befestigungselementes, d.h. die Ausbildung als Hülse und die federnde Eigenschaft der Hülsenwandung, bei allen Elementen vorkommen. Als Anwendungsbeispiel wurde die Automobilindustrie erwähnt, doch sind andere Anwendungsgebiete ebenfalls dafür geeignet, beispielsweise der Apparatebau.

## Patentansprüche

1. Montagesystem, enthaltend einen Schweissbolzen und ein daran befestigbares Montageteil, dadurch gekennzeichnet, dass der Schweissbolzen als radial federnde Hülse (1, 12, 20, 30, 32, 35, 35', 46, 62, 70) ausgebildet ist und dass das Montageteil (10, 16, 21, 40, 41, 43, 50, 55, 60, 66) durch starre Strukturen kraft- und/oder formschlüssig mit dem Schweissbolzen verbindbar ist.

2. Montagesystem nach Anspruch 1, das zusätzlich einen Spreizstift (53, 58, 59) oder eine Schraube (11) zum Verriegeln der Verbindung des Schweissbolzens (1, 12, 20, 32, 35, 35', 62) mit dem Montageteil (10, 55) enthält, wobei der Spreizstift bzw. die Schraube im Verriegelungszustand (Fig. 4, Fig. 16) den Schweissbolzen radial auseinanderspreizt.

3. Montagesystem nach Anspruch 1 oder 2, dadurch gekennzeichnet, dass das Montageteil eine Bohrung (18, 27, 40b) in starrem Material und/oder einen Pfosten (40a, 42, 44) aus starrem Material aufweist, und dass das starre Material kraft- und/oder formschlüssig mit dem federnden Schweissbolzen verbindbar ist.

4. Montagesystem nach einem der Ansprüche 1 bis 3, dadurch gekennzeichnet, dass das Montageteil eine Bohrung (18, 27) bzw. einen Pfosten (44) mit einem oder mehreren Absätzen (28, 68) aufweist, die ein Hintergreifen durch Rückhalteteile (23, 38) erlauben, welche an der Aussenwand bzw. der Innenwand eines Schweissbolzens angebracht sind.

5. Montagesystem nach einem der Ansprüche 1 bis 4, dessen Montageteil einen Pfosten besitzt, dadurch gekennzeichnet, dass der Pfosten (44) an seinem freien Ende eine pilzkopfartige Verbreiterung (45) aufweist.

6. Montagesystem nach einem der Ansprüche 1 bis 5, dadurch gekennzeichnet, dass das Montageteil aus einer starren Kappe (60) mit Innenwulst (61) besteht, oder eine solche enthält.

7. Montagesystem nach einem der Ansprüche 1 bis 6, dadurch gekennzeichnet, dass in die Bohrung (69) des Montageteils mindestens ein Vorsprung (65) aus starrem Material hineinragt bzw. aus dem Pfosten mindestens ein solcher herausragt, wobei der Vorsprung ein Einschnappen in ein entsprechend geformtes Fenster (64) in der Hülsenwand (63) des federnden Schweissbolzens ermöglicht.

8. Montagesystem nach einem der Ansprüche 1 bis 7, dadurch gekennzeichnet, dass der Umfang der Bohrung (18, 27) des Montageteil mit zunehmender Tiefe in mindestens einem Tiefenbereich (19, 19a, 67) kontinuierlich abnimmt, bzw. dass der Umfang des Pfostens (40a, 42, 44), von seinem freien Ende aus gesehen, mit zunehmender Entfernung in mindestens einem Entfernungs-Bereich kontinuierlich zunimmt, so dass bei der Montage ein Zusammenfedern bzw. ein Auseinanderfedern des Schweissbolzens erleichtert wird.

9. Montagesystem nach einem der Ansprüche 1 bis 8, dadurch gekennzeichnet, dass das Montageteil ein Kabelkontaktteil (49) zum Schliessen eines elektrischen Kontaktes aufweist, wobei der elektrische Kontakt durch ein Verbinden des starren Materials mit dem Schweissbolzen zustande kommt.

10. Auf eine Unterlage (9) angeschweisster Schweissbolzen nach einem der Ansprüche 1 - 9, dadurch gekennzeichnet, dass der Schweissbolzen nur in einer Ringzone (8) angeschweisst ist.

11. Angeschweisster Schweissbolzen nach Anspruch 10, dadurch gekennzeichnet, dass die Dicke der Unterlage und die Dicke des Schweissbolzen an der anzuschweissenden Stirnseite ungefähr gleich sind, und der Schweissbolzen mindestens eine Stirnseite (3, 13, 36, 48) mit trichterförmig nach innen oder U-förmig nach aussen gebogenem Rand (14) aufweist.

12. Verfahren zur Montage eines Montageteils für ein Montagesystem nach einem der Ansprüche 1 bis 9 an einen durch Lichtbogenschweissung an die Struktur befestigbaren Schweissbolzen, dadurch gekennzeichnet, dass das Montageteil unter Ausnutzung der federnden Eigenschaft des als radial federnde Hülse ausgebildeten Schweissbolzens kraft- und/oder formschlüssig mit diesem verbunden wird und in einem früheren Montageschritt das Montageteil vorläufig mit dem Schweissbolzen verbunden wird, worauf eine elastische Kraft des federnden Schweissbolzens die Verbindung hält, und dass die Verbindung in einem späteren Montageschritt mit einem Spreizstift oder einer Schraube verriegelt wird.

13. Verfahren zur Demontage eines Montageteils für ein Montagesystem nach einem der Ansprüche 1 bis 9, das an einem durch Lichtbogenschweissung an eine Struktur befestigten Schweissbolzen dem Montagesystem entsprechend montiert ist, dadurch gekennzeichnet, dass der als radial federnde Hülse ausgebildete Schweissbolzen bei der Demontage mit Hilfe eines Werkzeuges elastisch verformt wird.

14. Schweissbolzen für ein Montagesystem nach Anspruch 1 oder 2, dadurch gekennzeichnet, dass der Schweissbolzen als radial federnde Hülse (1, 12, 20, 30, 32, 35, 35', 46, 62, 70) ausgebildet ist.

15. Schweissbolzen nach Anspruch 14, dadurch gekennzeichnet, dass er einen Längsschlitz aufweist, der ein radiales Zusammen- oder Auseinanderfedern erlaubt, wobei der Längsschlitz (2, 22, 47) durchgehend ist und parallel oder geneigt zur Längsachse des Schweissbolzens verläuft.

16. Schweissbolzen nach Anspruch 14 oder 15, dadurch gekennzeichnet, dass mindestens eine Stirnseite (3, 13, 36, 48) trichterförmig nach innen und im Bereich der kleineren Trichteröffnung schraubengewindeförmig (4) ausgebildet ist.

17. Schweissbolzen nach einem der Ansprüche 14 bis 16, dadurch gekennzeichnet, dass mindestens eine Stirnseite (13) einen U-förmig nach aussen gebogenen Rand (14) aufweist, der zum Rückhalten eines entsprechend geformten Montageelements (16) dienen kann.

18. Schweissbolzen nach einem der Ansprüche 14 bis 17, dadurch gekennzeichnet, dass seine Längswand aus zwei Endteilen (23) und einem engeren Mittelteil (24) besteht, wobei einer der dadurch entstandenen Absätze (25) zum Rückhalten eines Montageelementes (21) dient.

19. Schweissbolzen nach einem der Ansprüche 14 bis 18, dadurch gekennzeichnet, dass der mittlere Teil der Längswand (31) des Schweissbolzens (30) als Schrauben-Innen- oder -Aussengewinde (29) ausgebildet ist.

20. Schweissbolzen nach einem der Ansprüche 14 bis 19, dadurch gekennzeichnet, dass etwa die Mitte (33) seiner Längswand eineinhalb-S-förmig ausgebildet ist und im Innern ein Klemmring (34) angeordnet ist.

21. Schweissbolzen nach einem der Ansprüche 14 bis 16 und 18 bis 20, dadurch gekennzeichnet, dass er mindestens eine nach innen weisende Stirnfläche (36) aufweist, die mehrfach geschlitzt ist.

22. Schweissbolzen nach einem der Ansprüche 14 bis 21, dadurch gekennzeichnet, dass an der Längswand mindestens eine innere oder äussere Kralle (39, 39') angeordnet ist.

23. Schweissbolzen nach einem der Ansprüche 14 bis 22, dadurch gekennzeichnet, dass die Längswand im mittleren Teil eine geringere Dicke aufweist als gegen die Stirnflächen hin.

24. Schweissbolzen nach einem der Ansprüche 14 bis 23, dadurch gekennzeichnet, dass eine Hülsenwand (63) ein oder mehrere Fenster (64) aufweist.

25. Schweissbolzen nach einem der Ansprüche 14 bis 24, dadurch gekennzeichnet, dass die Aussen- oder die Innenfläche (71) der Hülsenwand des Schweissbolzens mehreckig, insbesondere sechseckig ausgebildet ist.

26. Schweissbolzen nach einem der Ansprüche 14 bis 25, dadurch gekennzeichnet, dass seine beiden Stirnseiten (3, 13, 36, 48) gleich ausgeführt sind, um ein lagerichtiges Vorsortieren in einem oder für ein Schweissgerät zu vermeiden.

## Claims

1. Assembling system, comprising a welding stud and an assembly part adapted to be fastened thereon, characterised in that the welding stud is in the form of a radially resilient sleeve (1, 12, 20, 30, 32, 35, 35', 46, 62, 70), and in that the assembly part (10, 16, 21, 40, 41, 43, 50, 55, 60, 66) is adapted to be fastened in a frictional and/or positively engaging manner by means of rigid structures.

2. Assembling system according to claim 1, additionally comprising a spreader pin (53, 58, 59) or a screw (11) in order to lock the connection of the welding stud (1, 12, 20, 32, 35, 35', 62,) to the assembly part (10, 55), the spreading pin or the screw, respectively, radially spreading the welding stud in the locked condition (Fig. 4, Fig. 16).

3. Assembling system according to claim 1 or 2, characterised in that the assembly part comprises a bore (18, 27, 40b) in rigid material and/or a stud (40a, 42, 44) of rigid material, and in that the rigid material is adapted to be connected to the resilient welding stud in a frictional and/or positively engaging manner.

4. Assembling system according to one of claims 1 to 3, characterised in that the assembly part comprises a bore (18, 27) resp. a stud (44) having one or a plurality of steps (28, 68) allowing the engagement of retaining portions (23, 38) provided on the external resp. the internal wall of a welding stud.

5. Assembling system according to one of claims 1 to 4 whose assembly part comprises a stud, characterised in that the free end of the stud (44) is provided with a mushroom-shaped enlargement (45).

6. Assembling system according to one of claims 1 to 5, characterised in that the assembly part consists of a rigid cap (60) having an internal bead (61), or includes such a cap.

7. Assembling system according to one of claims 1 to 6, characterised in that at least one projecting part (65) of rigid material projects into the bore (69) of the assembly part, resp. at least such a part projects from the stud, the projecting part being adapted to snap into a correspondingly shaped window (64) in the sleeve wall (63) of the resilient welding stud.

8. Assembling system according to one of claims 1 to 7, characterised in that the circumference of the bore (18, 27) of the assembly part continuously decreases with increasing depth in at least one depth range (19, 19a, 67), resp. in that the circumference of the stud (40a, 42, 44), seen from its free end, continuously increases with increasing distance in at least one distance range, so as to facilitate the compression rep. expansion of the welding stud in the assembly.

9. Assembling system according to one of claims 1 to 8, characterised in that the assembly part comprises a cable contact portion (49) adapted to close an electric contact, the electric contact being established by connecting the rigid material to the welding stud.

10. Welding stud according to one of claims 1 to 9 which is welded onto a support (9), characterised in that only an annular zone (8) of the welding stud is welded on.

11. Welded stud according to claim 10, characterised in that the thickness of the support and the thickness of the end face of the welding stud which is welded on are approximately equal, and in that the welding stud comprises at least one end face (3, 13, 36, 48) whose edge extends inwardly in a hopper shape or is bent outwardly in a U shape.

12. Method for the assembly of an assembly part for an assembling system according to one of claims 1 to 9 on a welding stud which is adapted to be fastened to the structure by arc welding, characterised in that the assembly part is connected to the welding stud in a frictional and/or positively engaging manner while taking advantage of the resilient property of the welding stud which is in the form of a radially resilient sleeve, the assembly part being provisionally connected to the welding stud in a former assembly step and an elastic force of the resilient welding stud maintaining the connection, and in that the connection is locked in a latter assembly step by means of a spreader pin or a screw.

13. Method for the disassembly of an assembly part for an assembling system according to one of claims 1 to 9, which is fastened, in a manner corresponding to the assembling system, to a welding stud which is attached to a structure by means of arc welding, characterised in that the welding stud in the form of a radially resilient sleeve is elastically deformed in the course of the disassembly by a tool.

14. Welding stud for an assembling system according to claim 1 or 2, characterised in that the welding stud is in the form of a radially resilient sleeve (1, 12, 20, 30, 32, 35, 35', 46, 62, 70).

15. Welding stud according to claim 14, characterised in that it is provided with a longitudinal slit allowing an elastic radial compression or expansion thereof, the longitudinal slit (2, 22, 47) being continuous and extending in parallel or inclined with respect to the longitudinal axis of the welding stud.

16. Welding stud according to claim 14 or 15, characterised in that at least one end face (3, 13, 36, 48) thereof is inwardly hopper-shaped while the smaller hopper opening is in the form of a screw thread (4).

17. Welding stud according to one of claims 14 to 16, characterised in that at least one end face (13) has an edge (14) bent outwardly in a 'U' shape which may serve to retain a correspondingly shaped assembly part (16).

18. Welding stud according to one of claims 14 to 17, characterised in that its longitudinal wall consists of two end portions (23) and a narrower central portion (24), one of the projections (25) resulting therefrom serving to retain an assembly part (21).

19. Welding stud according to one of claims 14 to 18, characterised in that the central portion of the longitudinal wall (31) of the welding stud (30) is in the form of an internal or external screw thread (29).

20. Welding stud according to one of claims 14 to 19, characterised in that approximately the central portion (33) of its longitudinal wall is in the shape of an S and a half, and a clamping ring (34) is disposed in the interior.

21. Welding stud according to one of claims 14 to 16 and 18 to 20, characterised in that it comprises at least one inwardly extending end face (36) which is provided with a plurality of slits.

22. Welding stud according to one of claims 14 to 21, characterised in that at least one internal or external claw (39, 39') is provided on the longitudinal wall thereof.

23. Welding stud according to one of claims 14 to 22, characterised in that the longitudinal wall has a lesser thickness in its central portion than towards the end faces.

24. Welding stud according to any one of claims 14 to 23, characterised in that one sleeve wall (63) has one or a plurality of windows (64).

25. Welding stud according to one of claims 14 to 24, characterised in that the external or the internal surface (71) of the sleeve wall of the welding stud is polygonal, more particularly hexagonal.

26. Welding stud according to one of claims 14 to 25, characterised in that its two end faces (3, 13, 36, 48) are equal in order to avoid previous sorting to ensure correct positioning in or for a welding apparatus.

## Revendications

1. Système d'assemblage, comprenant une cheville à souder et un élément d'assemblage pouvant être fixé à cette dernière, caractérisé en ce que la cheville à souder présente la forme d'une douille élastique (1, 12, 20, 30, 32, 35, 35', 46, 62, 70), et que ledit élément d'assemblage (10, 16, 21, 40, 41, 43, 50, 55, 60, 66) est capable d'être relié à la cheville à souder par adhérence et/ou par fermeture géométrique au moyen de structures rigides.

2. Système d'assemblage selon la revendication 1, comprenant en plus une broche d'écartement (53, 58, 59) ou une vis (11) permettant de verrouiller la fixation de la cheville à souder (1, 12, 20, 32, 35, 35', 62) sur l'élément d'assemblage (10, 55), ladite broche d'écartement resp. ladite vis écartant radialement la cheville à souder en condition verrouillée (fig. 4, fig. 16).

3. Système d'assemblage selon la revendication 1 ou 2, caractérisé en ce que ledit élément d'assemblage comporte un alésage (18, 27, 40b) pratiqué dans une matière rigide et/ou un poteau (40a, 42, 44) en matière rigide, et que ladite matière rigide est capable d'être fixée à la cheville à souder élastique par adhérence et/ou par fermeture géométrique.

4. Système d'assemblage selon l'une des revendications 1 à 3, caractérisé en ce que l'élément d'assemblage comporte un alésage (18, 27) resp. un poteau (44) ayant un ou plusieurs épaulements (28, 68) permettant l'engagement d'éléments de retenue (23, 28) disposés à la paroi extérieure resp. intérieure d'une cheville à souder.

5. Système d'assemblage selon l'une des revendications 1 à 4 dont l'élément d'assemblage comporte un poteau, caractérisé en ce que ledit poteau (44) présente à son extrémité libre un élargissement (45) en forme de champignon.

6. Système d'assemblage selon l'une des revendications 1 à 5, caractérisé en ce que l'élément d'assemblage est constitué d'un capuchon rigide (60) avec bourrelet intérieur (61), ou comporte un tel capuchon.

7. Système d'assemblage selon l'une des revendications 1 à 6, caractérisé en ce qu'au moins une saillie (65) en matière rigide rentre dans l'alésage (69) de l'élément d'assemblage resp. que le poteau présente au moins une telle saillie, ladite saillie pouvant s'encliqueter dans une fenêtre (64) de forme correspondante, pratiquée dans la paroi (63) de la douille de la cheville à souder élastique.

8. Système d'assemblage selon l'une des revendications 1 à 7, caractérisé en ce que la circonférence dudit alésage (18, 27) de l'élément d'assemblage décroît continuellement, lorsque la profondeur augmente, dans au moins un domaine de profondeurs (19, 19a, 67), resp. que la circonférence dudit poteau (40a, 42, 44) , vue depuis son extrémité libre, augmente continuellement avec la distance dans au moins un domaine de distances, de sorte à faciliter la compression resp. expansion de la cheville à souder lors de l'assemblage.

9. Système d'assemblage selon l'une des revendications 1 à 8, caractérisé en ce que l'élément d'assemblage comporte un élément de contact (49) permettant de fermer un contact électrique, le contact électrique étant établi en reliant ladite matière rigide à la cheville à souder.

10. Cheville à souder selon l'une des revendications 1 à 9, soudée sur un support (9), caractérisée en ce que ce n'est qu'une zone annulaire (8) de la cheville à souder qui est soudée.

11. Cheville soudée selon la revendication 10, caractérisée en ce que l'épaisseur du support et l'épaisseur de la face soudée de la cheville à souder sont approximativement égales, et que la cheville à souder comporte au moins une face (3, 13, 36, 48) dont le bord s'étend vers l'intérieur en forme d'entonnoir ou est plié vers l'extérieur en forme de U.

12. Procédé d'assemblage d'un élément d'assemblage pour un système d'assemblage selon l'une des revendications 1 à 9 sur une cheville à souder capable d'être soudée à la structure par soudage à l'arc, caractérisé en ce que l'élément d'assemblage est relié à la cheville à souder par adhérence et/ou fermeture géométrique en utilisant la propriété élastique de la cheville à souder sous forme d'une douille radialement élastique, que l'élément d'assemblage est relié provisoirement à la cheville à souder dans une étape d'assemblage antérieure, une force élastique de la cheville à souder élastique assurant ensuite la connexion, et que la connexion est verrouillée dans une étape d'assemblage ultérieure au moyen d'une broche d'écartement ou d'une vis.

13. Procédé de démontage d'un élément d'assemblage pour un système d'assemblage selon l'une des revendications 1 à 9, l'élément d'assemblage étant monté, d'une manière appropriée au système d'assemblage, sur une cheville soudée sur une structure par soudage à l'arc, caractérisé en ce que la cheville à souder sous forme d'une douille élastique est déformée de manière élastique lors du démontage au moyen d'un outil.

14. Cheville à souder pour un système d'assemblage selon la revendication 1 ou 2, caractérisée en ce qu'elle présente la forme d'une douille radialement élastique (1, 12, 20, 30, 32, 35, 35', 46, 62, 70).

15. Cheville à souder selon la revendication 14, caractérisée en ce qu'elle présente une fente longitudinale permettant une compression ou expansion élastique radiale, ladite fente longitudinale (2, 22, 47) étant traversante et parallèle ou inclinée par rapport à l'axe longitudinal de la cheville à souder.

16. Cheville à souder selon la revendication 14 ou 15, caractérisée en ce qu'au moins l'une de ses faces (3, 13, 36, 48) s'étend vers l'intérieur en entonnoir et présente la forme d'un taraudage (4) dans la zone de la plus petite ouverture dudit entonnoir.

17. Cheville à souder selon l'une des revendications 14 à 16, caractérisée en ce qu'au moins l'une de ses faces (13) présente un bord (14) replié vers l'extérieur en forme de U qui peut servir à retenir un élément d'assemblage (16) de forme correspondante.

18. Cheville à souder selon l'une des revendications 14 à 17, caractérisée en ce que sa paroi longitudinale est composée de deux parties extrêmes (23) et d'une partie centrale (24) plus étroite, l'un des épaulements (25) ainsi formés servant de retenue pour un élément d'assemblage (21).

19. Cheville à souder selon l'une des revendications 14 à 18, caractérisée en ce que la partie centrale de la paroi longitudinale (31) de la cheville à souder (30) présente la forme d'un filetage ou d'un taraudage (29).

20. Cheville à souder selon l'une des revendications 14 à 19, caractérisée en ce que le centre (33) approximatif de sa paroi longitudinale présente la forme d'un S et demi, et qu'une bague de serrage (34) est disposée à l'intérieur.

21. Cheville à souder selon l'une des revendications 14 à 16 et 18 à 20, caractérisée en ce qu'elle présente au moins une face (36) qui s'étend vers l'intérieur et comporte plusieurs fentes.

22. Cheville à souder selon l'une des revendications 14 à 21, caractérisée en ce que sa paroi longitudinale comporte au moins un crampon intérieur ou extérieur (39, 39').

23. Cheville à souder selon l'une des revendications 14 à 22, caractérisée en ce que la partie centrale de la paroi longitudinale est moins épaisse que les parties proches des faces.

24. Cheville à souder selon l'une des revendications 14 à 23, caractérisée en ce qu'une paroi (63) de la douille présente une ou plusieurs fenêtres (64).

25. Cheville à souder selon l'une des revendications 14 à 24, caractérisée en ce que la surface extérieure ou intérieure (71) de la paroi de la douille constituant la cheville à souder est polygonale, plus particulièrement hexagonale.

26. Cheville à souder selon l'une des revendications 14 à 25, caractérisée en ce que ses deux faces (3, 13, 36, 48) sont égales afin d'éviter un triage de positionnement préalable dans ou pour un appareil à souder.
